# FASCICULE DE BREVET EUROPEEN

(11) **EP 1 997 607 B1**
(45) Date de publication et mention de la délivrance du brevet: **23.03.2011**
(21) Numéro de dépôt: 08156506.1
(22) Date de dépôt: 20.05.2008
(51) Int. Cl.: B29C 47/02, B29C 47/06, B29C 47/92, B29C 47/14, B29C 47/56

(54) **Dispositif et méthode de gainage d'une nappe de fils**
Vorrichtung und Methode zur Ummantelung eines Strangs
Device and method for insulating a set of yarns

(30) Priorité: 31.05.2007 FR 0703926
(43) Date de publication de la demande: 03.12.2008
(73) Titulaire: Société de Technologie Michelin, 63000 Clermont-Ferrand (FR); Michelin Recherche et Technique S.A., 1763 Granges-Paccot (CH)
(72) Inventeur: Nicolas, Serge, 63100 Clermont-Ferrand (FR)
(74) Mandataire: Reynaud, Georges

(56) Documents cités:
- EP-A- 1 145 835
- FR-A- 2 101 168
- FR-A- 2 463 488
- GB-A- 923 208
- JP-A- 8 103 972
- US-A- 4 329 133
- US-A- 4 515 738
- US-A1- 2005 147 702
- DATABASE WPI Thomson Scientific, London, GB; AN 2005-661026 XP002468715 -& JP 2005 246736 A 15 septembre 2005 (2005-09-15)

## Description

L'invention concerne le domaine de la fabrication des produits composites de renforcement composés de fils enrobés de matière thermoplastique ou viscoélastique.

Plus particulièrement, l'invention s'intéresse à la fabrication des nappes de renfort, largement utilisées dans les pneumatiques destinés à équiper les véhicules terrestres.

Ces nappes, qui sont destinées à constituer les nappes de renfort carcasse ou sommet du pneumatique, sont formées de fils continus sensiblement parallèles entre eux et disposés selon un pas transversal donné. Les fils sont enrobés dans du caoutchouc.

On désigne sous le terme de fil, tout fil de renfort unitaire ou câblé, lui-même formé par un assemblage de fils unitaires. Les fils peuvent être indistinctement de nature textile, composite ou métallique.

Les procédés les plus connus de fabrication de ces nappes droit fil consistent à déposer une couche de caoutchouc des deux cotés de la nappe de fil en se servant d'une calandre formée de deux rouleaux aptes à presser les feuilles de caoutchoucs l'une sur l'autre de manière à ce que le caoutchouc pénètre dans l'espace libre entre les fils jusqu'à former des ponts de gomme.

Sont également connus des moyens de gainage, dans lesquels la nappe de fil passe au travers d'une filière d'enduction en amont de laquelle est disposée une chambre d'enduction communiquant avec un moyen d'alimentation apte à délivrer un produit caoutchouteux sous une pression et un débit donné. La nappe de fil circule depuis un guide fil placé à l'entrée du dispositif jusqu'à la chambre d'enduction où le mélange sous pression pénètre dans les espaces libres entre les fils, et ressort du dispositif en passant au travers d'une filière de calibrage destinée à conférer une épaisseur précise à la nappe de semi fini.

Des moyens d'alimentation en matériau, tel que par exemple une ou plusieurs extrudeuses à vis alimentent la chambre d'enduction par l'intermédiaire d'un ou plusieurs canaux débouchant sur la partie supérieure ou sur la partie inférieure de la nappe de fil.

Cette technique présente, entre autre, l'avantage de permettre une formation très régulière des ponts de gommes, en raison de la très bonne imprégnation des fils liée à la pression élevée qui règne dans la chambre d'enduction. Son emploi est particulièrement adapté pour réaliser, des nappes droit fil de faible largeur, semblables à des bandelettes, et destinées à la réalisation, par enroulement des dites bandelettes sur l'ébauche d'un pneumatique en cours de fabrication. Une autre application consiste à réaliser des nappes de renfort faisant un angle donné avec la direction circonférentielle en juxtaposant des tronçons de bandelettes selon un angle donné.

Toutefois, la fabrication des pneumatiques modernes requière des assemblages faisant appel à des géométries de plus en plus complexes et précises, ce qui impose de reconsidérer l'usage des moyens connus.

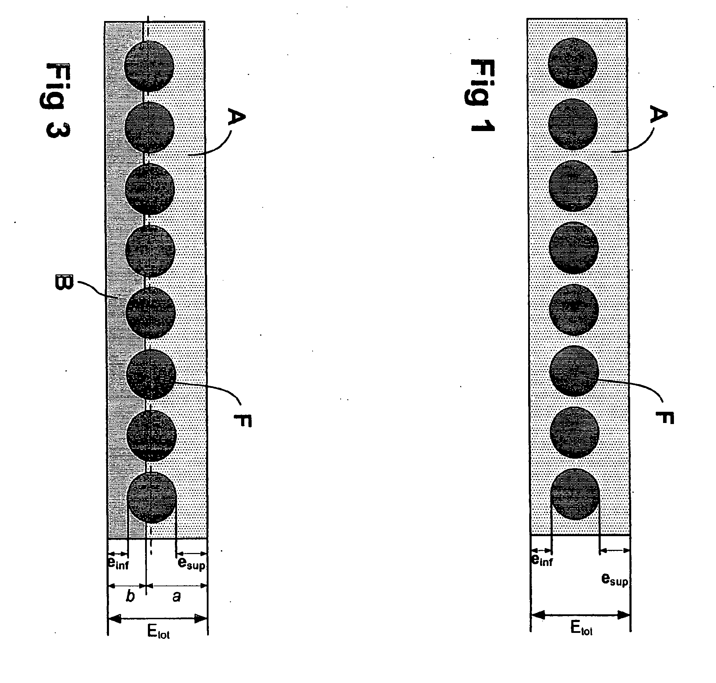

La figure 1 permet de visualiser une nappe droit fil du type recherché, dans laquelle le mélange caoutchouteux A recouvre les fils F de manière à ce que le dos supérieur des fils soit situé à une distance eₛᵤₚ de la surface supérieure de la nappe et le dos inférieur soit situé à une distance e_{inf} de la surface inférieure de la nappe dont l'épaisseur totale est notée Eₜₒₜ. On notera également que, dans ce type de nappe, les distances eₛᵤₚ et e_{inf} ne sont pas nécessairement égales.

Pour fabriquer une nappe droit fil telle qu'illustrée à la figure 1 à l'aide d'un dispositif de gainage, on fait varier les épaisseurs eₛᵤₚ et e_{inf}, en déplaçant le plan de la nappe de fil par rapport aux bords supérieur et inférieur de la filière. L'épaisseur totale Eₜₒₜ est déterminée par le diamètre des fils, la vitesse de circulation des fils dans le dispositif de gainage, et par la pression régnant dans la chambre d'enduction.

Il en résulte un certain nombre de difficultés liées à la maîtrise de la position de la nappe de fil par rapport à la surface. En effet, toute variation de pression entre les flux de mélange destinés à alimenter la partie supérieure de la nappe et les flux de mélange destinés à alimenter la partie inférieure de la nappe, entraîne un déplacement du fil vers le haut ou vers le bas.

A titre d'illustration, une différence de pression de 1 bar entre les deux flux sur une longueur de 10 mm génère une force perpendiculaire à la surface de la nappe de 0,6 N. Il serait possible d'augmenter la tension des fils de manière à éviter que ceux-ci ne subissent un déplacement trop important dans la direction perpendiculaire à la surface de la nappe.

Mais cette technique reste limitée en ce que le fil serait alors susceptible de couper dégrader la nappe formée par un élastomère non vulcanisé et encore très plastique.

Les différences de pression entre les flux destinés à nourrir en matériau la chambre d'enduction au niveau respectivement de la partie supérieure et la partie inférieure de la nappe de fil, sont la conséquence d'un grand nombre de paramètres qu'il n'est pas toujours facile de mettre sous contrôle. Ceci intervient en particulier lorsqu'on désire faire varier la pression dans la chambre d'enduction en fonction de la vitesse de circulation de la nappe de fil de manière à conserver une épaisseur totale Eₜₒₜ constante. D'autres paramètres ont également une influence tels que la température instantanée des organes en contact avec le mélange de caoutchouc, les différences localisées de rhéologie du mélange, la vitesse d'extrusion, le diamètre des câbles, le pas des câbles et enfin la forme et la géométrie des canaux d'écoulement.

Il s'en suit une irrégularité géométrique des épaisseurs de gomme au dos des fils qui n'est pas compatible avec la précision recherchée. Le préambule de la revendication 1 repose sur la publication US2005 147702 A1 qui décrit un dispositif du type décrit ci-dessus ainsi qu'une méthode correspondante.

L'invention a pour objet d'apporter une solution au problème posé, et permettre de fabriquer des nappes droit fil par gainage avec la précision recherchée.

Le dispositif de gainage en continu selon l'invention comprend :
- un guide fil,
- une chambre d'enduction dans laquelle débouchent un premier et un second canal d'alimentation indépendants l'un de l'autre, reliés respectivement à un premier et à un second moyen d'alimentation aptes à délivrer un premier et un second matériau sous une pression et un débit déterminé, et dont les sorties sont disposées au dessus et au dessous du plan de la nappe de fil et,une filière de sortie et,
- une filière de sortie.
La nappe de fil circule dans les différents organes du dispositif lorsque le dispositif est en fonctionnement.

Le dispositif selon l'invention est caractérisé en ce que, des moyens d'appréciation de la pression, reliés à un automatisme de pilotage de la pression de chacun des moyens d'alimentation sont disposés dans la chambre d'enduction, en vis-à-vis et au droit l'un de l'autre, de part et d'autre du plan de la nappe, et à proximité immédiate de la sortie des canaux d'alimentation.

Il est alors possible de réguler lesdits moyens d'alimentation de sorte que la pression du mélange à la sortie du premier canal d'alimentation soit égale à la pression du mélange à la sortie du deuxième canal d'alimentation, quel que soit le niveau de pression que l'on cherche à établir dans ladite chambre pour réguler l'épaisseur totale Eₜₒₜ de la nappe enrobée en fonction de la vitesse de la nappe de fil.

La différence de pression entre la partie supérieure et la partie inférieure de la nappe de fils est toujours sensiblement égale à zéro, ce qui permet d'éviter les déplacements du plan de fil par rapport à la filière de sortie.

La description qui suit, s'appui sur les figures 1 à 3, dans lesquelles :
- la figure 1 représente une vue schématique en coupe d'une nappe de fils enrobés, selon une première variante, et obtenue avec le procédé selon l'invention,
- la figure 2 représente une vue schématique en coupe d'un dispositif conforme à l'invention,
- la figure 3 représente une vue schématique en coupe d'une nappe de fils enrobés, selon une deuxième variante, et obtenue avec le procédé selon l'invention.

Comme cela a été évoqué dans les paragraphes précédents, la figure 1 représente une première variante de nappe de fil enrobé qu'il est possible d'obtenir avec le procédé et le dispositif selon l'invention.

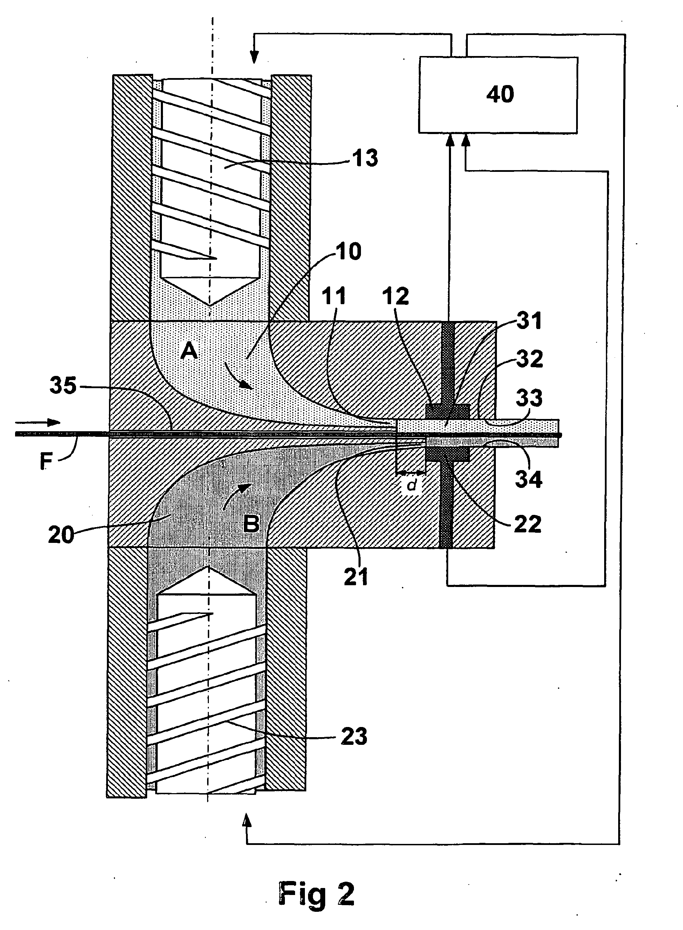

La figure 2 illustre un dispositif conforme à l'invention. Le moyen de gainage est formé par un guide fil 35 situé à l'entrée du dispositif, une chambre d'enduction 31 dans laquelle débouchent un premier canal d'alimentation 10 dont la sortie 11 est placée au-dessus du plan de la nappe de fils F. La sortie 21 d'un second canal d'alimentation 20 débouche également dans la chambre d'enduction 31 en dessous du plan de la nappe de fils F. La sortie du dispositif s'effectue par la filière 32 comprenant un bord supérieur 33 et un bord inférieur 34 dont l'écartement sert à régler l'épaisseur totale Eₜₒₜ de la nappe enrobée. Des moyens (non représentés) assurent la circulation de la nappe de fil à une vitesse donnée dans le dispositif de gainage. Ces moyens assurent également la mise en tension des fils F.

Des moyens d'alimentation 13 et 23 sont reliés respectivement aux canaux d'alimentation 10 et 20. Les moyens d'alimentation peuvent être des moyens d'extrusion classiques, du type de ceux qui sont couramment utilisés dans l'industrie du caoutchouc et comprenant une vis animée en rotation par un moteur (non représenté). De manière équivalente, et lorsque le matériau d'enrobage est plus fluide, il est possible d'utiliser une pompe rotative ou une pompe volumétrique. Ces moyens sont aptes, chacun à leur manière, à délivrer le matériau (A, B) destiné à enrober les fils avec un débit donné et une pression donnée dans la chambre d'enrobage (31) par l'intermédiaire des canaux d'alimentation 10 et 20.

Les moyens d'alimentation en matériau 13 et 23 sont distincts l'un de l'autre.

Le dispositif comprend des moyens d'évaluation de la pression 12 et 22, tels que des sondes de pression, disposés dans la chambre d'enduction, placés en vis-à-vis et au droit l'un de l'autre, de part et d'autre du plan de la nappe, de manière à apprécier la pression à l'endroit où le mélange est susceptible d'influencer la position des fils.

Ces sondes de pression sont disposées au plus prés des sorties 11 et 21 des canaux d'alimentation 10 et 11, de sorte que la différence de pression entre les deux cotés de la nappe soit dépendante tout à la fois de la pression fournie par le moyen d'alimentation débouchant au niveau de la sortie considérée, et des variations de pression se produisant au moment de l'enrobage des fils par chacun des mélanges et susceptibles d'engendrer un déplacement des fils.

Il importe que les capteurs soient situés assez précisément au droit l'un de l'autre de manière à apprécier les forces s'exerçant perpendiculairement au plan de la nappe en un point donné.

Ces moyens d'évaluation de la pression sont reliés à un automatisme de pilotage 40 des moyens d'alimentation 13, 23, de manière à réguler la pression dans chacun des canaux d'alimentation en fonction d'une consigne donnée.

On s'arrange alors pour que la différence de pression de part et d'autre du plan de la nappe soit sensiblement égale à zéro.

Pour éviter une dérive lente du système, le pilotage d'un des moyens d'alimentation sert de moyen maître auquel le pilotage de l'autre moyen d'alimentation est asservi.

Ce dispositif se distingue donc des moyens de régulation connus, dans lesquels les moyens de mesure de la pression sont disposés à l'intérieur du canal d'alimentation, et qui ne permettent pas d'apprécier finement l'évolution des différences de pression dans une direction orthogonale au plan de la nappe.

La figure 2 illustre également une variante de mise en oeuvre du dispositif, dans laquelle la sortie 11 du canal 10 est décalée d'une distance d par rapport à la sortie 21 du canal 20, selon la direction de progression de la nappe de fil dans le dispositif.

Cet arrangement a pour effet que la nappe de fils est encore partiellement maintenue par le guide fil lorsque le mélange pénètre la partie supérieure de la nappe de fils. Les fils sont encore en appuis sur le guide fil qui empêche tout mouvement de la nappe de fils dans une direction perpendiculaire au plan de la nappe.

La nappe de fils ne se libère totalement de l'influence du guide fil qu'au niveau de la sortie 21 de l'autre moyen d'alimentation de sorte que, lorsque le mélange pénètre dans la partie inférieure de la nappe de fils, la dite nappe est en appui sur le mélange de la partie supérieure. Il en résulte une meilleure stabilité de la position des fils et par voie de conséquence, une meilleure précision des épaisseurs eₛᵤₚ et e_{inf}.

Il en résulte que les capteurs de pression sont disposés à proximité de la deuxième sortie 21, et en décalage d'une distance supérieure à d par rapport à la première sortie 11.

Le dispositif offre également un autre avantage par rapport aux dispositifs traditionnels dans lesquels le mélange provient d'un seul moyen d'alimentation.

Il n'est pas rare en effet qu'il soit nécessaire de réaliser une nappe dans laquelle le mélange caoutchouteux A formant la partie supérieure de la nappe soit différent du mélange caoutchouteux B formant la partie inférieure de la nappe comme cela est illustré par la figure 3. Dans cette configuration, la position du centre des fils, matérialisée sur la figure 3 par une ligne en pointillé, ne correspond pas nécessairement à la ligne de séparation entre le mélange A et le mélange B.

Il est alors nécessaire de maîtriser de la manière la plus précise les épaisseurs respectives *a* et *b* des mélanges A et B, épaisseurs dont la somme est égale à l'épaisseur totale Eₜₒₜ.

Il a été mis en évidence qu'il est possible de faire varier l'épaisseur *a* par rapport à l'épaisseur b, en faisant varier la distance d séparant la sortie 11 du canal d'alimentation 10 de la sortie 21 du canal d'alimentation 20, sans qu'il soit nécessaire de faire varier le niveau de la pression dans la chambre d'enduction, lequel est de première importance pour maîtriser l'épaisseur totale comme cela a été évoqué dans les paragraphes précédents.

Une autre utilisation du dispositif selon l'invention consiste à procéder à l'enregistrement de la différence de pression entre les deux moyens d'évaluation 12 et 22 à des fins de contrôle du produit final sortant du dispositif. Il est ainsi possible, lorsque cette différence dépasse un certain seuil, de conclure que la zone dans laquelle est intervenue cette anomalie est impropre à être utilisée dans une étape ultérieure de fabrication. Il suffit alors d'identifier d'une manière quelconque la zone en question, sans qu'il soit nécessaire d'interrompre la production de la nappe enrobée, et de procéder à son élimination dans une phase ultérieure de fabrication

Le dispositif faisant l'objet de la présente description permet donc de résoudre le problème posé qui concerne la maîtrise de la géométrie des nappes de renfort, et offre également de multiples perspectives pour faire évoluer la construction des pneumatiques.

## Revendications

1. Dispositif de gainage en continu par un matériau thermoplastique ou viscoélastique (A, B) d'une nappe de fils, formée par un ensemble de fils (F) sensiblement parallèles entre eux, comprenant,
- un guide fil (35),
- une chambre d'enduction (31) dans laquelle débouchent un premier (10) et un second (20) canal d'alimentation indépendants l'un de l'autre, reliés respectivement à un premier (13) et à un second (23) moyen d'alimentation aptes à délivrer un premier (A) et un second (B) matériau sous une pression et un débit déterminé, et dont les sorties (11, 21) sont disposées au dessus et au dessous du plan de la nappe de fil (F) et,
- une filière de sortie (32), dans lesquels la nappe de fil (F) circule lorsque le dispositif est en fonctionnement,
**caractérisé en ce que** des moyens d'appréciation de la pression (12, 22), reliés à un automatisme de pilotage (40) de la pression de chacun des moyens d'alimentation (13, 23) sont disposés dans la chambre d'enduction (31), en vis-à-vis et au droit l'un de l'autre, de part et d'autre du plan de la nappe, et à proximité immédiate de la sortie (11, 21) des canaux d'alimentation (10, 20).

2. Dispositif de gainage selon la revendication 1, dans lequel les sorties (11, 21) des canaux d'alimentations sont décalées d'une distance (d) donnée selon la direction de progression de la nappe de fil dans le dispositif.

3. Méthode de gainage en continu par un matériau thermoplastique ou viscoélastique (A, B) d'une nappe de fils, formée par un ensemble de fils (F) sensiblement parallèles entre eux et circulant selon une direction donnée dans un dispositif de gainage selon l'une des revendications 1 ou 2, dans laquelle on régule le fonctionnement des moyens d'alimentation (13, 23) de sorte que la différence de pression mesurée par les deux moyens d'appréciation de la pression situés dans la chambre d'enduction (31) soit nulle.

4. Méthode de gainage selon la revendication 3, dans laquelle les matériaux (A, B) sont des matériaux viscoélastique à base de caoutchouc.

5. Méthode de gainage selon la revendication 3 ou 4 dans laquelle le matériau déposé sur la face supérieure (A) est différent du matériau déposé sur la face inférieure (B).

6. Méthode de gainage selon la revendication 5, dans laquelle on fait varier la distance (d) entre les sorties (11, 21) des canaux d'alimentation (10, 11) de manière à faire varier l'épaisseur (a) de matériau (A) déposé sur la face supérieure de la nappe de fil par rapport à l'épaisseur (b) de matériau (B) déposée sur la face inférieure de la nappe de fil.

7. Méthode de gainage selon l'une des revendications 3 à 6, dans laquelle le calcul de la différence de pression entre les deux moyens d'appréciation de la pression (12, 22) situés dans la chambre d'enduction (31) sert à évaluer la conformité du produit final obtenu.

## Claims

1. Device for continuously sheathing a ply of threads with a thermoplastic or viscoelastic material (A, B), said ply being formed by an array of approximately mutually parallel threads (F), which device comprises:
- a thread guide (35);
- a coating chamber (31) into which a first feed channel (10) and a second feed channel (20) run, which are independent of each other, connected to a first feed means (13) and to a second feed means (23) respectively and capable of delivering a first material (A) and a second material (B) under pressure and with a defined flow rate, and the outlets (11, 21) of which channels are placed above and below the plane of the ply of threads (F); and
- an output die (32), through which the ply of threads (F) runs when the device is in operation,
**characterized in that** pressure-measuring means (12, 22), connected to a controller (40) for controlling the pressure of each of the feed means (13, 23), are placed in the coating chamber (31) facing and in line with each other, on either side of the plane of the ply and in the immediate vicinity of the outlet (11, 21) for the feed channels (10, 20).

2. Sheathing device according to Claim 1, in which the outlets (11, 21) of the feed channels are offset by a given distance (d) along the direction in which the ply of threads advances through the sheathing device.

3. Method for continuously sheathing a ply of threads with a thermoplastic or viscoelastic material (A, B), said ply being formed by an array of approximately mutually parallel threads (F) running in a given direction through a sheathing device according to either of Claims 1 and 2, in which the operation of the feed means (13, 23) is regulated in such a way that the pressure difference measured by the two pressure-measurement means located in the coating chamber (31) is zero.

4. Sheathing method according to Claim 3, in which the materials (A, B) are rubber-based viscoelastic materials.

5. Sheathing method according to Claim 3 or 4, in which the material (A) deposited on the upper face is different from the material (B) deposited on the lower face.

6. Sheathing method according to Claim 5, in which the distance (d) between the outlets (11, 21) of the feed channels (10, 11) is varied so as to cause the thickness (a) of material (A) deposited on the upper face of the ply of threads relative to the thickness (b) of material (B) deposited on the lower face of the ply of threads to vary.

7. Sheathing method according to one of Claims 3 to 6, in which the calculation of the pressure difference between the two pressure measurement means (12, 22) located in the coating chamber (31) is used to determine the conformity of the final product obtained.

## Patentansprüche

1. Vorrichtung zum ununterbrochenen Umhüllen eines Kordgewebes mit einem thermoplastischen oder viskoelastischen Material (A, B), wobei das Gewebe aus einer Gesamtheit von im Wesentlichen zueinander parallelen Fasern (F) gebildet ist, mit:
- einer Fadenführung (35),
- einer Überzugkammer (31), in die ein erster Versorgungskanal (10) und ein zweiter Versorgungskanal (20) münden, die voneinander unabhängig sind und mit einem ersten Versorgungsmittel (13) bzw. einem zweiten Versorgungsmittel (23) verbunden sind, die ein erstes Material (A) bzw. ein zweites Material (B) unter Druck und mit einem bestimmten Durchsatz liefern können, und deren Ausgänge (11, 21) über und unter einer Ebene des Kordgewebes (F) angeordnet sind, und
- einer Ausgangsfadendüse (32), in der das Kordgewebe (F) zirkuliert, wenn die Vorrichtung in Betrieb ist,
**dadurch gekennzeichnet, dass** Mittel (12, 22) für die Bewertung des Drucks, die mit einer Automatik (40) für die Steuerung des Drucks jedes der Versorgungsmittel (13, 23) verbunden sind, in der Überzugkammer (31) einander gegenüber und in einer Linie beiderseits der Ebene des Gewebes und in unmittelbarer Nähe des Ausgangs (11, 21) der Versorgungskanäle (10, 20) angeordnet sind.

2. Umhüllungsvorrichtung nach Anspruch 1, wobei die Ausgänge (11, 21) der Versorgungskanäle um eine gegebene Strecke (d) in Richtung der Vorwärtsbewegung des Kordgewebes in der Vorrichtung versetzt sind.

3. Verfahren zum ununterbrochenen Umhüllen eines Kordgewebes mit einem thermoplastischen oder viskoelastischen Material (A, B), wobei das Gewebe aus einer Gesamtheit von im Wesentlichen zueinander parallelen Fasern (F) gebildet ist und in einer gegebenen Richtung in einer Umhüllungsvorrichtung nach einem der Ansprüche 1 oder 2 zirkuliert, wobei der Betrieb der Versorgungsmittel (13, 23) in der Weise reguliert wird, dass die Druckdifferenz, die durch die Mittel zum Bewerten des Drucks gemessen wird, die sich in der Überzugkammer (31) befinden, Null wird.

4. Umhüllungsverfahren nach Anspruch 3, wobei die Materialien (A, B) viskoelastische Materialien auf Kautschukbasis sind.

5. Umhüllungsverfahren nach Anspruch 3 oder 4, wobei das Material, das auf die obere Fläche (A) aufgebracht wird, von dem Material, das auf die untere Fläche (B) aufgebracht wird, verschieden ist.

6. Umhüllungsverfahren nach Anspruch 5, wobei der Abstand (d) zwischen den Ausgängen (11, 21) der Versorgungskanäle (10, 11) in der Weise variiert wird, dass die Dicke (a) des Materials (A), das auf der Oberfläche des Kordgewebes aufgebracht wird, in Bezug auf die Dicke (b) des Materials (B), das auf die untere Fläche des Kordgewebes aufgebracht wird, variiert wird.

7. Umhüllungsverfahren nach einem der Ansprüche 3 bis 6, wobei die Berechnung der Druckdifferenz zwischen den zwei Mitteln zum Bewerten des Drucks (12, 22), die sich in der Überzugkammer (31) befinden, dazu dient, die Gleichförmigkeit des erhaltenen Endprodukts zu bewerten.
